(19) Europäisches Patentamt
European Patent Office
Office européen des brevets

(11) **EP 3 301 824 B1**

(12) **EUROPEAN PATENT SPECIFICATION**

(45) Date of publication and mention
of the grant of the patent:
**17.06.2020 Bulletin 2020/25**

(51) Int Cl.:
***H04B 7/0456*** (2017.01)    ***H04B 7/0452*** (2017.01)
***H04B 7/06*** (2006.01)

(21) Application number: **16191100.3**

(22) Date of filing: **28.09.2016**

(54) **COMMUNICATION NETWORK COMPONENT AND METHOD FOR REQUESTING CHANNEL INFORMATION**

KOMMUNIKATIONSNETZWERKKOMPONENTE UND VERFAHREN ZUR ANFORDERUNG VON KANALINFORMATIONEN

COMPOSANT DE RÉSEAU DE COMMUNICATION ET PROCÉDÉ DE DEMANDE D'INFORMATIONS DE CANAL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**04.04.2018 Bulletin 2018/14**

(73) Proprietor: **Intel IP Corporation**
**Santa Clara, CA 95054 (US)**

(72) Inventor: **KIM, Jee Hyun**
**82008 Unterhaching (DE)**

(74) Representative: **Lang, Johannes et al**
**Bardehle Pagenberg Partnerschaft mbB**
**Patentanwälte, Rechtsanwälte**
**Prinzregentenplatz 7**
**81675 München (DE)**

(56) References cited:
**EP-A1- 1 919 096**       **US-A1- 2008 165 876**
**US-A1- 2009 086 842**

• **ZTE: "Variable Granularity Feedback", 3GPP DRAFT; R1-100526, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Valencia, Spain; 20100118, 12 January 2010 (2010-01-12), XP050418155, [retrieved on 2010-01-12]**

## Description

## Technical Field

Embodiments described herein generally relate to communication network components and methods for requesting channel information.

## Background

Advanced communication techniques such as multiple-input multiple-output and in particular multi-user MIMO (MU-MIMO) for communication between the network side of a cellular communication system and a subscriber terminal require the feedback of channel information with high accuracy from the subscriber terminal to the network side. This introduces a high feedback overhead as well as high computational complexity on the terminal side. Accordingly, approaches to provide channel information feedback efficiently are desirable.

US 2009/0086842 A1 relates to wireless communication systems that allow both single-user MIMO subscriber stations and multi-user MIMO subscriber stations to operate within a common network region. In SU-MIMO, a base station communicates with a single subscriber station at a time, through a corresponding MIMO channel. The base station may first transmit channel sounding to the subscriber station through the channel. The subscriber station then uses the channel sounding to generate a channel matrix and beam forming information (e.g., one or more beam forming vectors). The beam forming information may then be fed back to the base station for use in performing pre-coding in a subsequent data transmission. In MU-MIMO, a base station may communicate with multiple subscriber stations at the same time and within the same frequency band. The base station may collect channel related information from a large number of subscriber stations in a corresponding cell and then analyze the information to select a smaller number of subscriber stations for simultaneous communication. The base station may then use the channel related information to perform pre-coding to simultaneously transmit to the selected subscriber stations. The channel related information may be obtained from the subscriber stations in a manner similar to that described for SU-MIMO. That is, the base station can first transmit channel sounding to the subscriber stations in the cell and the subscriber stations can then use the received channel sounding to generate beam forming vectors. The beam forming vectors may then be fed back to the base station from the individual subscriber stations at appropriate times. A multi-resolution codebook is provided that can service both SU-MIMO subscriber stations and MU-MIMO subscriber stations in the same cell. The multi-resolution codebook may include a higher resolution "fine" codebook for use with MU-MIMO subscriber stations and a lower resolution "coarse" codebook for use with SU-MIMO subscriber stations. That is, the MU-MIMO subscriber stations within the cell will use the fine codebook to quantize channel related information (e.g., beam forming vectors, etc.) to be fed back to the base station and the SU-MIMO subscriber stations within the cell will use the coarse codebook to quantize channel related information to be fed back to the base station.

A document TSG-RAN WG1 #59bis presented by ZTE in Valencia, Spain, January 18-22, 2010 and entitled "Variable Granularity Feedback" proposes to divide a cell, in which MU-MIMO is used, into several feedback rate regions and to employ codebooks with different granularity for each region, based on their average SNR.

US 2008/0165876 A1 relates to the generation of a codebook for a MIMO system. A generated codebook can be downloaded from a base station to a terminal.

EP 1919096 A1 relates to a MIMO system in which differential precoding information is provided for tracking small changes in the radio channel. However, the codebook is not able to track faster changes in the radio channel as for example evoked by high mobility.

Whenever the change in the channel is too large, a detector may decide on transmitting absolute precoding information.

The present disclosure provides a scheme that reduces overhead.

This is achieved by a communication network component as in claim 1 and a method for requesting channel information as in claim 12.

Further optional features of the invention are mentioned in claims 2 to 11 and claim 13.

## Brief Description of the Drawings

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:

Figure 1 shows a communication system, e.g. an LTE (Long Term Evolution) communication system.
Figure 2 shows a communication arrangement illustrating usage of multiple-input multiple-output (MIMO).
Figure 3 shows a communication arrangement illustrating a scenario of single-user MIMO usage and multi-user MIMO usage.
Figure 4 shows a flow diagram illustrating an example of a scheduling algorithm.
Figure 5 shows a communication network component.
Figure 6 shows a flow diagram illustrating a method for requesting channel information, for example carried out by a communication network component.

## Description of Embodiments

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

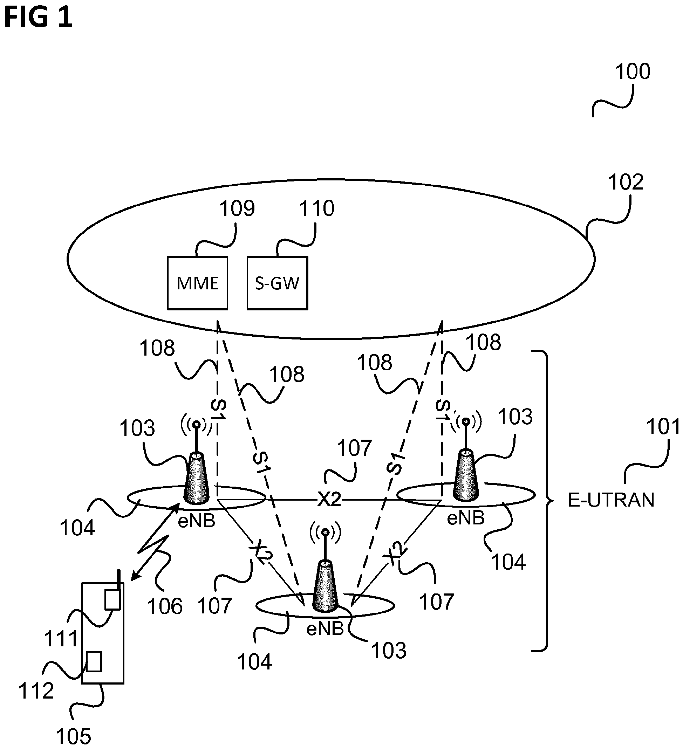

Figure 1 shows a communication system 100, e.g. an LTE (Long Term Evolution) communication system.

The communication system 100 includes a radio access network (e.g. an E-UTRAN, Evolved UMTS (Universal Mobile Communications System) Terrestrial Radio Access Network according to LTE) 101 and a core network (e.g. an EPC, Evolved Packet Core, according LTE) 102. The radio access network 101 may include base (transceiver) stations (e.g. eNodeBs, eNBs, according to LTE) 103. Each base station 103 provides radio coverage for one or more mobile radio cells 104 of the radio access network 101.

A mobile terminal (also referred to as UE, user equipment, or MS, mobile station) 105 located in one of the mobile radio cells 104 (in this example the leftmost radio cell 104) may communicate with the core network 102 and with other mobile terminals 105 via the base station providing coverage in (in other words operating) the mobile radio cell.

Control and user data are transmitted between a base station 103 and a mobile terminal 105 located in the mobile radio cell 104 operated by the base station 103 over the air interface 106 on the basis of a multiple access method.

The base stations 103 are interconnected with each other by means of a first interface 107, e.g. an X2 interface. The base stations 103 are also connected by means of a second interface 108, e.g. an S1 interface, to the core network, e.g. to an MME (Mobility Management Entity) 109, and a Serving Gateway (S-GW) 110. For example, the MME 109 is responsible for controlling the mobility of mobile terminals located in the coverage area of E-UTRAN, while the S-GW 110 is responsible for handling the transmission of user data between mobile terminals 105 and core network 102.

The radio access network 101 and the core network may support communication according to various communication technologies, e.g. mobile communication standards. For example, each base station 103 may provide a radio communication connection via the air interface between itself and the mobile terminal 105 according to LTE, UMTS, GSM (Global System for Mobile Communications), GPRS (General Packet Radio Service), EDGE (Enhanced Data Rates for GSM Evolution) radio access. Accordingly, the radio access network 102 may operate as an E-UTRAN, a UTRAN, a GSM radio access network, or a GERAN (GSM EDGE Radio Access Network). Analogously, the core network 102 may include the functionality of an EPC, a UMTS core network or a GSM core network. The approaches described herein may also be applied to future RAT technologies such as 5G.

For uplink radio communication via the air interface 106, the mobile terminal 105 includes a radio transmitter (TX RF) 111.

The mobile terminal 105 may include an identity module 112 (e.g. implemented by a chip card) that allows the mobile terminal 105 to identify itself as a subscriber of the communication network (e.g. as an LTE subscriber) formed by the radio access network 101 and the core network 102 and thus to use the communication network as a home network.

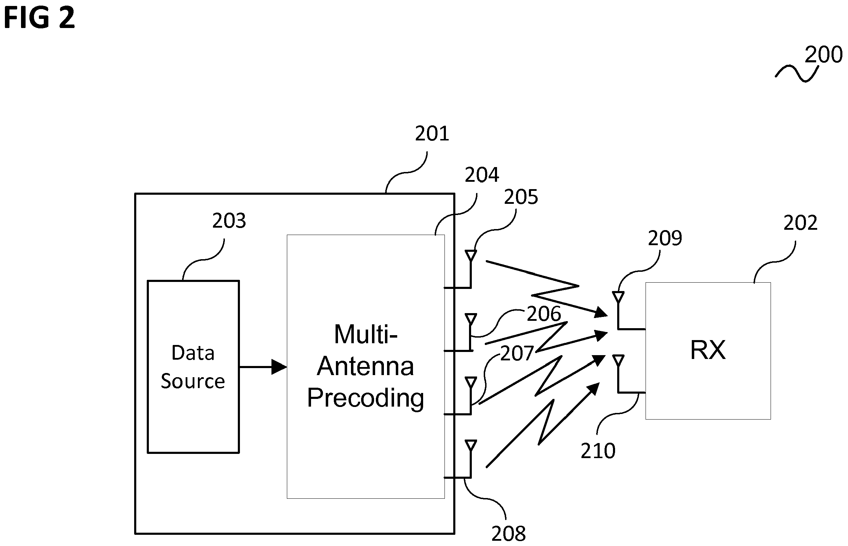

The mobile terminal 105 as well as its serving base station 103 may each be provided with a plurality of antennas and the base station 103 may serve the mobile terminal 105 using MIMO (multiple-input multiple-output). This is illustrated in figure 2.

Figure 2 shows a communication arrangement 200 according to an embodiment.

The communication arrangement 200 includes a transmitter (TX) 201, e.g. corresponding to a base station 103, and a receiver (RX) 202, e.g. corresponding to the mobile terminal 105 which is served by the base station 103. The transmitter 201 includes a data source 203 which generates data to be transmitted in the form of data symbols (e.g. modulation symbols selected from a set of constellation symbols). The data symbols are supplied to a precoding circuit 204 which generates transmission symbols from the data symbols and associates each transmission symbol with one of a plurality of antennas 205, 206, 207, 208 and a transmission resource. Each transmission symbol is transmitted to the receiver 202, which may include a plurality of receiving antennas 209, 210 (for example two or more receiving antennas) using the antenna 205, 206, 207, 208 and the transmission resource associated with the transmission symbol. In this example, the transmitter includes four transmit antennas. The transmission resource is for example a time slot (e.g. a time transmission interval) or a (sub-)carrier signal. That means that a transmission symbol is for example associated with a time slot and is sent in this time slot or is associated with a carrier signal and is transmitted using this carrier signal (or both).

The example of figure 2 can be seen as a SU(single user)-MIMO scenario, where a single multi-antenna transmitter is communicating with a single multi-antenna receiver. In contrast, in a MU(multi users)-MIMO scenario, a multi-antenna transmitter communicates with a plurality of different receivers (e.g. communication terminals) using the same frequency spectrum.

Investigations on how to increase gains when a MU-MIMO system is in use, especially by using a precoding scheme at the DL (downlink) transmitter side, e.g.,

base station (BS) or eNB 103, based on feedback messages including channel (feedback) information from the receiver, e.g. a mobile station (MS) or an user equipment (UE) 105, show that for enhanced MU-MIMO operations, an improved accuracy of the (spatial) feedback should be supported. It is also well recognized that the full channel (spatial) information, e.g., all the subspace information conveyed by the channel covariance matrix, offers superior MU-MIMO system performance. The high accuracy of the feedback can be achieved by introducing a high granularity (i.e. resolution) codebook which, however, entails high feedback overhead as well as high computational complexity at the MS. The current 3GPP LTE standard does not include usage of the high granularity codebook for MU-MIMO systems. However, it can be expected that in future cellular systems, e.g., 5G, the high granularity codebook and its efficient deployment schemes, e.g., adaptive codebook or differential codebook, should be indispensable for successful utilization of the MU-MIMO mode.

According to the approaches and examples described in the following different codebook sets are used depending on the scenarios, e.g., a low resolution codebook for MSs in SU-MIMO mode while a high resolution codebook is used for MSs in MU-MIMO mode. Since this may make the scheduling scheme at the network side (e.g. BS or eNB 103) complicated approaches are further given in the following including a unified and systematic scheduling mechanism which can be used for operations at the network side.

According to various examples, the network side performs the user grouping, i.e., the decision whether to apply SU-MIMO or MU-MIMO for a certain mobile terminal, and the decision about the tracking mode (to find MSs with low mobility, which are eligible for low overhead/complexity feedback scheme) for a given MU-MIMO group of mobile terminals in a hierarchical manner by introducing timers with different expiration time.

From the cellular network operation point of view, the BS 103 needs to categorize MSs 105 to several groups, e.g., those which are eligible for SU-MIMO or for MU-MIMO, and those which are eligible for reduced feedback among MU-MIMO qualified MSs. This categorization can be costly in terms of computational complexity at the BS(s), hence it should typically be avoided to perform the categorization too frequently. On the other hand, as the MSs move around, their propagation channels vary accordingly, therefore the categorization should take place frequently enough to reflect this channel variation. In short, a scheme is desirable which facilitates achieving a trade-off by tuning the system parameters.

The categorization can be designed to be performed in a step-by-step manner, starting from the user grouping, then to the tracking mode qualification, and finally to the user group/tracking mode exit qualification with an increasing frequency of operation. It is because the user grouping, which sorts out MSs for its eligibility to SU- or MU-MIMO, can be done less frequently based on the long term channel information only (low resolution feedback should be sufficient) while the tracking mode decision, which finds MSs (belonging to the same MU-MIMO group) which show the temporally correlated channel, may be done more frequently as this decision is based on the user mobility. Once in tracking mode, the MSs should report their channel information by high resolution codebook via a reduced (encoded) feedback scheme for the sake of reduced feedback overhead/complexity at the MS.

A feedback overhead reduction can be achieved for example by exploiting the channel temporal correlation for low mobility case, in which the whole feedback codebook can be categorized by a certain distance metric (e.g., Chordal distance for measuring distance between subspaces being spanned by a codebook that is designed to represent a channel spatial information) to smaller subgroups. In this case, each subgroup might be composed of feedback codes which are placed closely to each other, in terms of the used distance metric (e.g., Chordal distance), such that MS should not have to search for the whole feedback codebook, but only for a certain subgroup of which the number of codes to search is reduced (therefore leads to a smaller feedback in bits). This limited subset of the whole codebook should be sufficient in case of a low mobility MS, as the channel would not vary so dramatically and the expected channel variation should be able to be represented by a confined subgroup of the codebook. Complexity at the mobile terminal can be decreased accordingly, due to the confined search area. This organization of codebook into subgroups can be either static or dynamic, and the specific scheme of the codebook organization in use should be reflected to encoding/decoding scheme of feedback accordingly so that the associated mobile terminal(s) and the network have the same understanding on interpretation of the feedbacks. It might be worthwhile to note that "refresh" of the feedback by using the whole codebook needs to be done from time to time (periodically or event-driven), in order not to lose track of the channel variation. The detailed/precise mechanism may follow the specific implementation scheme for feedback reduction.

By setting

user grouping timer > tracking mode entrance qualification timer > exit qualification timer,

the overall feedback overhead can be managed efficiently at the system level, and SU- and MU-MIMO grouping together with deployment of high resolution feedback can be performed in a hierarchical and systematic manner, with a reasonable scheduling complexity at the BS.

According to one approach, for example, first, the network side performs a user grouping at the expiration of a user grouping timer in order to select MSs which are eligible for the MU-MIMO processing, i.e., of which the channel directions are as far spatially separated to each other as possible that they are least likely to interfere with each other when MU-MIMO is performed. At this stage, MSs report with low resolution feedback.

Second, for those selected MSs which belong to the same group, the network side selects MSs which would be eligible for tracking mode, in which a high resolution codebook can be used with reduced feedback overhead/complexity scheme, based on their mobility at the expiration of a tracking mode entrance qualification timer (whose timer value is for example shorter than the user grouping timer). These MSs enter into a tracking mode by being commanded to report with high resolution feedback.

Third, for the MSs which belong to the same group and are operating in the tracking mode, the network side executes a kind of qualification test to check whether they are still eligible for the tracking mode and MU-MIMO operation, at the expiration of an exit qualification timer (its timer value is shorter than tracking mode entrance qualification timer).

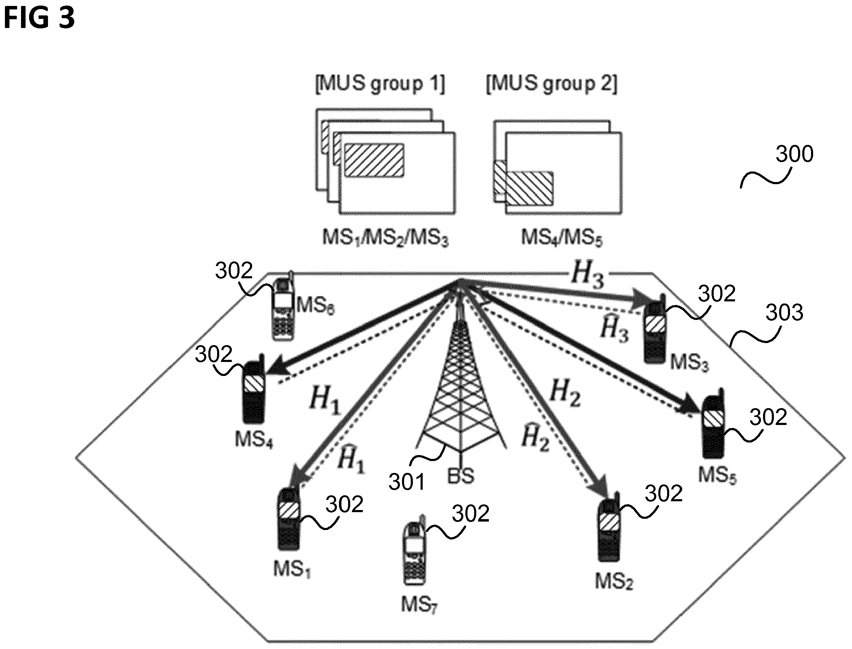

In the following, examples are described in more detail with reference to a scenario as illustrated in figure 3.

Figure 3 shows a communication arrangement 300.

A base station (BS) 301 serves a plurality of mobile stations 302 denoted $MS_1$ to $MS_7$ located in a radio cell 303 operated by the base station 301. The base station 301 is a base station of multiplicity of base stations of a cellular communication system which supports a SU-MIMO communication scheme as well as a MU-MIMO communication scheme. The decision of applying SU-MIMO or MU-MIMO for a mobile station 302 is performed at the BS 301, based on feedback messages provided by the MSs. For this, each MS 302 measures the downlink channel (e.g. as characterized by the respective one of channel matrices $H_1$ to $H_7$) and provides this channel information back to the BS 301. To reduce the uplink control overhead, the channel may be quantized, e.g., each MS 302 may provide its channel directional (spatial) information as the index of a predefined codebook of the limited size.

In case of MU-MIMO, the high accuracy of the channel information matters for the communication performance (a high granularity/resolution codebook is typically required for MU-MIMO), while in case of SU-MIMO, a low resolution codebook is typically sufficient. Using a high resolution codebook (> 6 bit) is challenging as it requires high UL signaling overhead as well as high computational complexity at the MS 302. For example, the codebook itself is composed of vectors or matrices and in the high resolution codebook, a 6 bit (or more) code word represents a channel vector or matrix.

A feedback encoding scheme may be used, e.g., differential feedback or adaptive feedback, etc. Such a scheme makes use of the temporal correlation of the channel to reduce the feedback overhead and the computational complexity at the MS 302.

MU-MIMO may for example be used for MSs with low mobility by using a high resolution codebook with a feedback encoding scheme in place to keep the overhead and complexity at a reasonable level. In the following, a scheduling scheme is described for this case.

The DL channel characteristics are different for each MS 302 in the cell due to the different channel propagation environment and different MS mobility. Some MSs 302 might be suitable for SU-MIMO, whereas it may be beneficial from the system capacity perspective if some other MSs can be grouped together to be served using the same time-/frequency-resources at the same time (MU-MIMO). In order to exploit the benefit of MU-MIMO, the channel matrix of each MS 302 is probed with respect to other MSs' channel matrix so as to find the set of suitable MSs of which their channel signatures are as far spatially distant to each other as possible (i.e. which are "best companions" to each other). The resulting set of MSs is herein denoted as MU-MIMO User Service (MUS) group. In short, the MSs which belong to the same MUS group are least likely to interfere with each other when a MU-MIMO scheme is to be applied. In order to do this user grouping at the BS 301, the BS 301 needs to know about the DL channel matrix $H_i$ (where i= 1, ..., 7 is the MS index) of each MS 302, and this can be provided by the MS 302 in a form of the quantized channel information based on the codebook of the limited size, which is denoted as $\hat{H}_i$ in figure 3.

In the example of figure 1, there are two MUS groups have, in which three MSs ($MS_1$, $MS_2$, $MS_3$) are served with the same resource via MU-MIMO scheme while two MSs ($MS_4$, $MS_5$) are served with another same resource via another MU-MIMO scheme. To get the full benefit of MU-MIMO, a high resolution codebook is required. For a slowly varying channel, the MSs can be still able to provide a high resolution channel information via a feedback encoding scheme which exploits channel temporal correlation without increasing the UL signaling overhead/computational complexity at the MS. Therefore it is assumed that the MU-MIMO is applied to the MSs in the same MUS group of which the channel shows a high temporal correlation.

It should be noted that that $MS_6$ and $MS_7$ do not belong to any MUS group in the example of figure 3, which means they may for example be served using SU-MIMO, or other less spectrally efficient transmission schemes rather than MU-MIMO, due to their DL propagation channel status. It should further be noted that it is assumed here that the BS 301 generates and transmits a precoded reference signals/pilot symbols in the DL frame so that the BS 301 does not have to choose from a predefined precoding matrix set, but rather freely compute and apply the whatever precoding matrix which deems suitable for the current transmission environment, based on the user channel reports and the associated computation.

One potential issue in a scenario such as illustrated in figure 3 is typically that the BS 301 needs to probe the DL channel information from every MS in the cell constantly to update the MUS grouping and so on, as the DL channel situation can change quickly due to its innate nature as the mobile channel. This might be challenging in the sense that there can be high number of active MSs (> 100) in the cell 303 at a certain time, and the MUS grouping can be very computationally complex. Hence, an approach to organize this scheduling algorithm so that it can be handled in a reasonable manner is desirable.

According to various examples this is addressed by performing the scheduling at the BS 301 in a hierarchical manner, i.e., to perform the most channel-temporal-change-sensitive scheduling most frequently. Based on this channel-temporal-change-sensitivity analysis, the MSs 302 in the cell 303 can be classified into different sets. First, all the MSs 302 in the cell 303 automatically at first belong to a superset, denoted Candidates group. Its sensitivity to channel temporal change is not identified initially, so the BS 301 commands a basic reporting of the channel information to the MSs in the Candidates group, e.g., CQI, low resolution channel directional information (CDI), etc., in the least frequent manner. Among the superset Candidates group, there can be several sets MUS groups whose members (i.e. the MSs contained in one of the MUS groups) are eligible for the MU-MIMO scheme. In each MUS group, there can be one Tracking Mode (TM) subset whose members are eligible for the encoded feedback scheme (high resolution feedback with reduced overhead/complexity). It may depend on the network vendor's choice, but it may be desirable to apply MU-MIMO to the MSs belonging to the Tracking Mode set. Other MSs, which do not belong to TM set, can be basically considered to be eligible for SU-MIMO or other less spectrally efficient transmission schemes. The network side may update these sets with different periodicity based on different timer value setting.

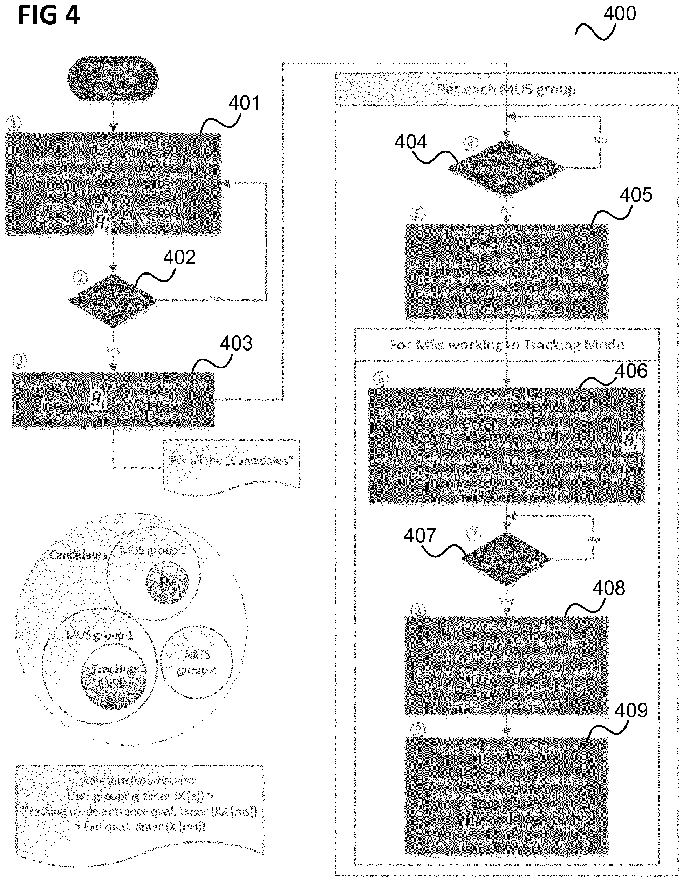

Figure 4 shows a flow diagram 400 illustrating an example of a scheduling algorithm.

In 401, as a prerequisite condition, the BS 301 commands all the MSs 302 in the cell 303 (i.e. the members of the Candidates group) to report the quantized channel information by using a low resolution codebook. The BS 301 collects and monitors this low resolution channel information $\widehat{H}_i^l$ (where i=1, ..., 7 is the MS index). Optionally, the BS 301 may request the MSs 302 to report the Doppler spread estimate (

$$f_{DoS} := \frac{vf_c}{c} \cdot \cos(\theta),$$ where fc: carrier frequency, v: speed of UE, c: speed of radio propagation, θ: angle of the velocity vector $\theta \in [0,\pi]$) as well for future assessment of the MS mobility.

In 402, it is checked whether the User Grouping Timer is expired (which is a system parameter of for example a few seconds). Until it has expired, the procedure stays in 401.

When the User Grouping Timer has expired, in 403, the BS 301 performs the user grouping based on the collected low resolution channel information $\widehat{H}_i^l$ to find the MSs 302 eligible for the MU-MIMO scheme. Regarding user grouping schemes, a semi-orthogonal user grouping method may for example be used. As a result of this procedure, the BS 301 generates the (one or more) MUS group(s).

The following procedure is performed per MUS group generated in 403.

In 404, the procedure pauses until the Tracking Mode Entrance Qualification Timer has expired (which is a system parameter of a for example a few tens of milliseconds).

In 405, the BS 301 checks every MS 302 in this MUS group if it would be eligible for Tracking Mode (e.g. whether there is high channel temporal correlation due to low mobility), based on its mobility. The BS 301 can estimate each MS's mobility by itself or make use of the reported Doppler spread estimate $f_{DoS}$, if available. Here the BS 301 may use the normalized Doppler estimate and its associated predefined threshold value to remove the band dependency, e.g.,

if ($\gamma_D < \gamma_{D,threshold}$) take this MS to the Tracking Mode ™ set; end

where $\gamma_D = \frac{|f_{DoS}|}{f_{D,max}}$ is the normalized Doppler spread estimate,

$f_{D,max}$ : maximum Doppler shift (Band-dependent),

$\gamma_{D,threshold}$: Band-independent threshold value, taken from simulations/field trial, etc.

The following is performed take place for MSs operating in Tracking Mode (TM).

In 406, the BS 301 commands MSs 302 qualified for TM to enter into Tracking Mode operation, i.e., to report the high resolution channel information $\widehat{H}_i^h$ (with a differential or adaptive feedback encoding scheme) to make the best use of the MU-MIMO. The BS 301 applies the MU-MIMO scheme for MSs in TM. As the high resolution codebook might be big and not required for every MSs, this codebook can be downloaded from the BS 301 to the MSs in TM on the needs basis, to save memory space at the MS.

In 407, the procedure pauses until the Exit Qualification Timer is expired (which is a system parameter of for example a few Milliseconds),

In 408, the BS 301 checks every MS in TM if it satisfies a MUS group exit condition, e.g., both MUS grouping conditions not being satisfied and the block error rate being over the predefined threshold value. If found, the BS 301 expels these MS(s) from this MUS group: if (MUS grouping condition used in 403 not satisfied AND BLER > BLER_threshold) expel this MS from this MUS group; end.

It should be noted that the expelled MS(s) still belong to the Candidates set and are therefore eligible for all the basic procedures of 401 - 403.

In 409, the BS 301 checks for the every remaining MS in TM if it satisfies the Tracking Mode exit condition, e.g., both the normalized Doppler spread estimate being higher than the predefined threshold value and the block error rate being over the predefined threshold value. If found, the BS expels these MS(s) from TM operation:

if ($\gamma_D > \gamma_{D,threshold}$ && BLER > BLER$_{threshold}$)
expel this MS from TM;
end

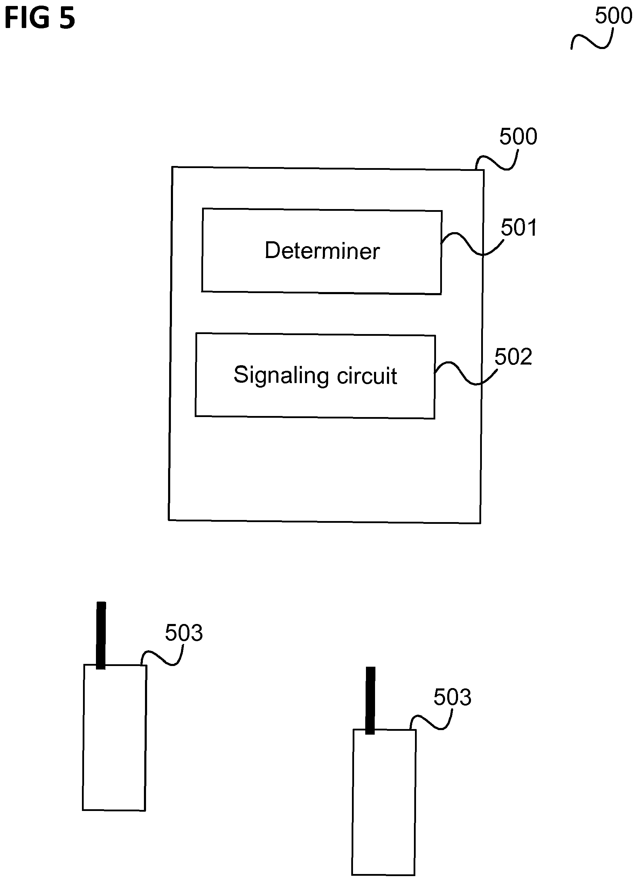

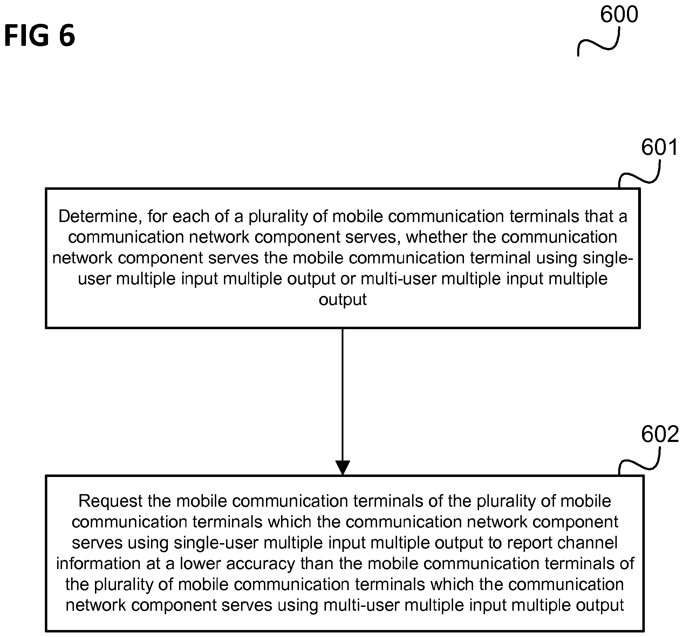

It should be noted that the expelled MS(s) still belong to the associated "MUS group" set, therefore eligible for "per MUS group" procedures of 404 onwards.
Once a timer is expired, a new timer is started automatically right after the required procedures are executed.
It should be noted that in the Exit MUS Group Check of 408 and the Exit Tracking Mode Check of 409, a BLER check condition is and-combined with another condition, since it should be okay to let MS(s) remain in the MUS group/TM as long as its block error rate is kept low. This condition can take a more conservative notion by switching AND to OR operation. However, this might lead to too small number of MSs in TM (hence in MU-MIMO).
By setting the user grouping timer higher than the tracking mode entrance qualification timer and this in turn higher than the exit qualification timer, the overall feedback overhead can be managed efficiently at the system level, and SU- and MU-MIMO grouping together with deployment of high resolution feedback can be performed in a hierarchical and systematic manner, with a reasonable scheduling complexity at the BS. It should be noted in this context that the timer values can be set adaptively to the traffic situation (number of active MSs in the cell), e.g., different values for different times of the day (the higher the traffic, the shorter the timer values).
The individual timer values and the Exit qualification conditions are system parameters which can be used for tuning of the overall system operation, which can serve the specific needs of the network operators (balancing between SU-/MU-MIMO user numbers, controlling the feedback overhead, etc.).
In summary, according to various examples a communication network component is provided as illustrated in figure 5.
Figure 5 shows a communication network component 500.
The communication network component 500 includes a determiner 501 configured to determine, for each of a plurality of mobile communication terminals 503 that the communication network component 500 serves, whether the communication network component 500 serves the mobile communication terminal 503 using single-user multiple-input multiple-output or multi-user multiple-input multiple-output.
The communication network component 500 further includes a signaling circuit 502 configured to request the mobile communication terminals of the plurality of mobile communication terminals 503 which the communication network component serves using single-user multiple-input multiple-output to report channel information at a lower accuracy than the mobile communication terminals of the plurality of mobile communication terminals 503 which the communication network component serves using multi-user multiple-input multiple-output.
According to various examples, in other words, mobile terminals served by SU-MIMO are to report channel (feedback) information with a lower accuracy than mobile terminals served by MU-MIMO. The communication network component 500 may for example request the mobile (communication) terminals to report channel information accordingly by sending one or more messages to the mobile terminals. This may also be a general, e.g. broadcast, message (e.g. as part of system information transmission) and may for example generally inform the mobile terminals that they are to send the channel information using the lower accuracy (e.g. at a predefined first accuracy level) when they are served with SU-MIMO and that they are to send the channel information using higher accuracy (e.g. at a predefined second accuracy level).
The components of the communication network component (e.g. the determiner and the signaling circuit) as well as the components of any of the mobile communication terminals may for example be implemented by one or more circuits. A "circuit" may be understood as any kind of a logic implementing entity, which may be special purpose circuitry or a processor executing software stored in a memory, firmware, or any combination thereof. Thus a "circuit" may be a hard-wired logic circuit or a programmable logic circuit such as a programmable processor, e.g. a microprocessor. A "circuit" may also be a processor executing software, e.g. any kind of computer program. Any other kind of implementation of the respective functions which will be described in more detail below may also be understood as a "circuit".
The communication network component 500 for example carries out a method as illustrated in figure 6.
Figure 6 shows a flow diagram 600 illustrating a method for requesting channel information, for example carried out by a communication network component.
In 601 the communication network component determines, for each of a plurality of mobile communication terminals that a communication network component serves, whether the communication network component serves the mobile communication terminal using single-user multiple-input multiple-output or multi-user multiple-input multiple-output.
In 602 the communication network component requests the mobile communication terminals of the plurality of mobile communication terminals which the communication network component serves using single-user multiple-input multiple-output to report channel information at a lower accuracy than the mobile communication terminals of the plurality of mobile communication terminals which the communication network component serves using multi-user multiple-input multiple-output.

While specific aspects have been described, it should be understood by those skilled in the art that various changes in form and detail may be made therein without departing from the scope of the aspects of this disclosure as defined by the appended claims. The scope is thus indicated by the appended claims and all changes which come within the true meaning of the claims are therefore intended to be embraced.

## Claims

1. A communication network component (500) comprising:

    a determiner (501) configured to determine, for each of a plurality of mobile communication terminals (503) that the communication network component serves, whether the communication network component serves the mobile communication terminal using single-user multiple-input multiple-output or multi-user multiple-input multiple-output, group the plurality of mobile communication terminals into a first group which the communication network component serves using single-user multiple-input multiple-output and into a second group which the communication network component serves using multi-user multiple-input multiple-output, and perform a grouping of mobile communication terminals which the communication network component serves using multi-user multiple-input multiple-output into a first subset and a second subset with a higher frequency of occurrence than the grouping of the plurality of mobile communication terminals into the first group which the communication network component serves using single-user multiple-input multiple-output and into the second group which the communication network component serves using multi-user multiple-input multiple-output; and
    a signaling circuit (502) configured to request the mobile communication terminals of the plurality of mobile communication terminals which the communication network component serves using single-user multiple-input multiple-output to report channel information at a lower accuracy than the mobile communication terminals of the plurality of mobile communication terminals which the communication network component serves using multi-user multiple-input multiple-output, and request the first subset of the mobile communication terminals which the communication network component serves using multi-user multiple-input multiple-output to report channel information with a first high accuracy and the second subset of the mobile communication terminals of the mobile communication terminals which the communication network component serves using multi-user multiple-input multiple-output to report channel information with a second high accuracy, wherein the first high accuracy is higher than the second high accuracy.

2. The communication network component of claim 1, wherein the signaling circuit (502) is configured to request the mobile communication terminals of the plurality of mobile communication terminals which the communication network component serves using multi-user multiple-input multiple-output to report channel information at a higher accuracy than the mobile communication terminals of the mobile communication terminals which the communication network component serves using single-user multiple-input multiple-output.

3. The communication network component of claim 1 or 2, wherein reporting channel information at the lower accuracy comprises reporting channel information based on a first codebook having a lower resolution than a second codebook based on which the mobile communication terminals which the communication network component serves using multi-user multiple-input multiple-output are to report channel information.

4. The communication network component of any one of claims 1 to 3, wherein the signaling circuit (502) is configured to request the mobile communication terminals to download the second codebook if they are to report channel information based on the second codebook.

5. The communication network component of any one of claims 1 to 4, wherein the communication network component (500) is a component of a cellular mobile communication network.

6. The communication network component of any one of claims 1 to 5, wherein the communication network component (500) is at least partially implemented by a base station.

7. The communication network component of any one of claims 1 to 6, wherein the communication network component (500) comprises a receiver configured to receive channel information from the mobile communication terminals (503).

8. The communication network component of any one of claims 1 to 7, wherein the determiner (501) is configured to decide, for each of a plurality of mobile communication terminals (503) that the communication network component serves, whether the communication network component is to serve the mobile communication terminal using single-user multiple-input multiple-output or multi-user multiple-input multiple-output, based on channel information provided by the mobile communication terminals (503).

9. The communication network component of any one of claims 1 to 8, wherein both the first high accuracy and the second high accuracy are higher than the lower accuracy.

10. The communication network component of any one of claims 1 to 9, wherein the determiner (501) is configured to group the mobile communication terminals which the communication network component serves using multi-user multiple-input multiple-output into the first subset and into the second subset based on information representing their respective mobilities.

11. The communication network component of any one of claims 1 to 10, wherein the determiner (501) is configured to detect whether a mobile communication terminal should be moved from the second subset to the first subset with a higher frequency of occurrence than grouping of the mobile communication terminals in the first subset and the second subset.

12. A method for requesting channel information comprising:

determining (601), for each of a plurality of mobile communication terminals that a communication network component serves, whether the communication network component serves the mobile communication terminal using single-user multiple-input multiple-output or multi-user multiple-input multiple-output, grouping (403) the plurality of mobile communication terminals into a first group which the communication network component serves using single-user multiple-input multiple-output and into a second group which the communication network component serves using multi-user multiple-input multiple-output, and performing a grouping (405) of mobile communication terminals which the communication network component serves using multi-user multiple-input multiple-output into a first subset and a second subset with a higher frequency of occurrence than the grouping of the plurality of mobile communication terminals into the first group which the communication network component serves using single-user multiple-input multiple-output and into the second group which the communication network component serves using multi-user multiple-input multiple-output;
requesting (602) the mobile communication terminals of the plurality of mobile communication terminals which the communication network component serves using single-user multiple-input multiple-output to report channel information at a lower accuracy than the mobile communication terminals of the plurality of mobile communication terminals which the communication network component serves using multi-user multiple-input multiple-output; and
requesting (406) the first subset of the mobile communication terminals which the communication network component serves using multi-user multiple-input multiple-output to report channel information with a first high accuracy and the second subset of the mobile communication terminals of the mobile communication terminals which the communication network component serves using multi-user multiple-input multiple-output to report channel information with a second high accuracy, wherein the first high accuracy is higher than the second high accuracy.

13. The method for requesting channel information of claim 12 further comprising:
detecting whether a mobile communication terminal should be moved from the second subset to the first subset with a higher frequency of occurrence than grouping of the mobile communication terminals in the first subset and the second subset.

**Patentansprüche**

1. Kommunikationsnetzwerkkomponente (500) umfassend;
Einen Bestimmer (501), der konfiguriert ist zum
Bestimmen, für jeden einer Vielzahl von mobilen Kommunikationsterminals (503), die von der Kommunikationsnetzwerkkomponente bedient werden, ob die Kommunikationsnetzwerkkomponente den mobilen Kommunikationsterminal unter Verwenden von Single-User Multiple-Input Multiple-Output oder Multiple-User Multiple-Input Multiple-Output bedient,
Gruppieren der Vielzahl von mobilen Kommunikationsterminals in eine erste Gruppe, die von der Kommunikationsnetzwerkkomponente unter Verwenden von Single-User Multiple-Input Multiple-Output bedient wird, und in eine zweite Gruppe, die von der Kommunikationsnetzwerkkomponente unter Verwenden von Multiple-User Multiple-Input Multiple-Output bedient wird, und
Durchführen eines Gruppierens von mobilen Kommunikationsterminals, die von der Kommunikationsnetzwerkkomponente unter Verwenden von Multiple-User Multiple-Input Multiple-Output bedient werden, in einen ersten Untersatz und einen zweiten Untersatz, mit einer höheren Auftrittshäufigkeit als das Gruppieren der Vielzahl von mobilen Kommunikationsterminals in die erste Gruppe, die von der Kommunikationsnetzwerkkomponente unter Verwenden von Single-User Multiple-Input Multiple-Output bedient wird, und in die zweite Gruppe, die von der Kommunikationsnetzwerkkomponente unter Verwenden von Multiple-User Multiple-Input Multiple-Output bedient wird; und
eine Signalisierungsschaltung (502), die konfiguriert ist zum
Anfragen der mobilen Kommunikationsterminals der Vielzahl von mobilen Kommunikationsterminals, die von der Kommunikationsnetzwerkkomponente unter Verwenden von Single-User Multiple-Input Multiple-Output bedient werden, zum Berichten von Kanalinformationen mit einer niedrigeren Genauigkeit als die mobilen Kommunikationsterminals der Vielzahl von mobilen Kommunikationsterminals, die von der Kommunikationsnetzwerkkomponente unter Verwenden von Multiple-User Multiple-Input Multiple-Output bedient werden, und
zum Anfragen des ersten Untersatzes von mobilen Kommunikationsterminals, die von der Kommunikationsnetzwerkkomponente unter Verwenden von Multiple-User Multiple-Input Multiple-Output bedient werden, zum Berichten von Kanalinformationen mit einer ersten hohen Genauigkeit, und des zweiten Untersatzes von mobilen Kommunikationsterminals, die von der Kommunikationsnetzwerkkomponente unter Verwenden von Multiple-User Multiple-Input Multiple-Output bedient werden, zum Berichten von Kanalinformationen mit einer zweiten hohen Genauigkeit, wobei die erste hohe Genauigkeit höher ist als die zweite hohe Genauigkeit.

2. Kommunikationsnetzwerkkomponente nach Anspruch 1, wobei die Signalisierungsschaltung (502) konfiguriert ist zum Anfragen der mobilen Kommunikationsterminals der Vielzahl von mobilen Kommunikationsterminals, die von der Kommunikationsnetzwerkkomponente unter Verwenden von Multiple-User Multiple-Input Multiple-Output bedient werden, zum Berichten von Kanalinformationen mit einer höheren Genauigkeit als die mobilen Kommunikationsterminals der mobilen Kommunikationsterminals, die von der Kommunikationsnetzwerkkomponente unter Verwenden von Single-User Multiple-Input Multiple-Output bedient werden.

3. Kommunikationsnetzwerkkomponente nach Anspruch 1 oder 2, wobei Berichten von Kanalinformationen mit einer niedrigeren Genauigkeit Berichten von Kanalinformationen basierend auf einem ersten Codebuch mit einer niedrigeren Auflösung als ein zweites Codebuch umfasst, auf dessen Grundlagen die mobilen Kommunikationsterminals, die von der Kommunikationsnetzwerkkomponente unter Verwenden von Multiple-User Multiple-Input Multiple-Output bedient werden, Kanalinformationen berichten sollen.

4. Kommunikationsnetzwerkkomponente nach einem der Ansprüche 1 bis 3, wobei die Signalisierungsschaltung (502) konfiguriert ist zum Anfragen der mobilen Kommunikationsterminals zum Herunterladen des zweiten Codebuchs, falls sie Kanalinformationen basierend auf dem zweiten Codebuch berichten sollen.

5. Kommunikationsnetzwerkkomponente nach einem der Ansprüche 1 bis 4, wobei die Kommunikationsnetzwerkkomponente (500) eine Komponente eines zellulären mobilen Kommunikationsnetzwerks ist.

6. Kommunikationsnetzwerkkomponente nach einem der Ansprüche 1 bis 5, wobei die Kommunikationsnetzwerkkomponente (500) zumindest teilweise durch eine Basisstation implementiert ist.

7. Kommunikationsnetzwerkkomponente nach einem der Ansprüche 1 bis 6, wobei die Kommunikationsnetzwerkkomponente (500) einen Empfänger umfasst, der konfiguriert ist zum Empfangen von Kanalinformationen von den mobilen Kommunikationsterminals (503).

8. Kommunikationsnetzwerkkomponente nach einem der Ansprüche 1 bis 7, wobei der Bestimmer (501) konfiguriert ist zum Entscheiden, für jeden einer Vielzahl von mobilen Kommunikationsterminals (503), die von der Kommunikationsnetzwerkkomponente bedient werden, ob die Kommunikationsnetzwerkkomponente die mobilen Kommunikationsterminals unter Verwenden von Single-User Multiple-Input Multiple-Output oder Multiple-User Multiple-Input Multiple-Output bedienen soll, basierend auf Kanalinformationen, die durch die mobilen Kommunikationsterminals (503) bereitgestellt werden.

9. Kommunikationsnetzwerkkomponente nach einem der Ansprüche 1 bis 8, wobei sowohl die erste hohe Genauigkeit als auch die zweite hohe Genauigkeit höher sind als die niedrigere Genauigkeit.

10. Kommunikationsnetzwerkkomponente nach einem der Ansprüche 1 bis 9, wobei der Bestimmer (501) konfiguriert ist zum Gruppieren der mobilen Kommunikationsterminals, die von der Kommunikationsnetzwerkkomponente unter verwenden von Multiple-User Multiple-Input Multiple-Output bedient werden, in den ersten Untersatz und in den zweiten Untersatz basierend auf Informationen, die deren jeweiligen Mobilitäten repräsentieren.

**11.** Kommunikationsnetzwerkkomponente nach einem der Ansprüche 1 bis 10, wobei der Bestimmer (501) konfiguriert ist zum Erfassen, ob ein mobiler Kommunikationsterminal von dem zweiten Untersatz in den ersten Untersatz verschoben werden sollte, mit einer höheren Auftrittshäufigkeit als Gruppieren der mobilen Kommunikationsterminals in den ersten Untersatz und den zweiten Untersatz.

**12.** Verfahren zum Anfragen von Kanalinformationen, das Verfahren umfassend:

Bestimmen (601), für jeden einer Vielzahl von mobilen Kommunikationsterminals, die von der Kommunikationsnetzwerkkomponente bedient werden, ob die Kommunikationsnetzwerkkomponente den mobilen Kommunikationsterminal unter Verwenden von Single-User Multiple-Input Multiple-Output oder Multiple-User Multiple-Input Multiple-Output bedient,

Gruppieren (403) der Vielzahl von mobilen Kommunikationsterminals in eine erste Gruppe, die von der Kommunikationsnetzwerkkomponente unter Verwenden von Single-User Multiple-Input Multiple-Output bedient wird, und eine zweite Gruppe, die von der Kommunikationsnetzwerkkomponente unter Verwenden von Multiple-User Multiple-Input Multiple-Output bedient wird, und

Durchführen eines Gruppierens (405) von mobilen Kommunikationsterminals, die von der Kommunikationsnetzwerkkomponente unter Verwenden von Multiple-User Multiple-Input Multiple-Output bedient werden, in einen ersten Untersatz und einen zweiten Untersatz, mit einer höheren Auftrittshäufigkeit als das Gruppieren der Vielzahl von mobilen Kommunikationsterminals in die erste Gruppe, die von der Kommunikationsnetzwerkkomponente unter Verwenden von Single-User Multiple-Input Multiple-Output bedient wird, und in die zweite Gruppe, die von der Kommunikationsnetzwerkkomponente unter Verwenden von Multiple-User Multiple-Input Multiple-Output bedient wird;

Anfragen (602) der mobilen Kommunikationsterminals der Vielzahl von mobilen Kommunikationsterminals, die von der Kommunikationsnetzwerkkomponente unter Verwenden von Single-User Multiple-Input Multiple-Output bedient werden, zum Berichten von Kanalinformationen mit einer niedrigeren Genauigkeit als die mobilen Kommunikationsterminals der Vielzahl von mobilen Kommunikationsterminals, die von der Kommunikationsnetzwerkkomponente unter Verwenden von Multiple-User Multiple-Input Multiple-Output bedient werden, und Anfragen (406) des ersten Untersatzes von mobilen Kommunikationsterminals, die von der Kommunikationsnetzwerkkomponente unter Verwenden von Multiple-User Multiple-Input Multiple-Output bedient werden, zum Berichten von Kanalinformationen mit einer ersten hohen Genauigkeit, und des zweiten Untersatzes von mobilen Kommunikationsterminals, die von der Kommunikationsnetzwerkkomponente unter Verwenden von Multiple-User Multiple-Input Multiple-Output bedient werden, zum Berichten von Kanalinformationen mit einer zweiten hohen Genauigkeit, wobei die erste hohe Genauigkeit höher ist als die zweite hohe Genauigkeit.

**13.** Verfahren zum Anfragen von Kanalinformationen nach Anspruch 12, ferner umfassend:
Erfassen, ob ein mobiler Kommunikationsterminal von dem zweiten Untersatz in den ersten Untersatz verschoben werden sollte, mit einer höheren Auftrittshäufigkeit als Gruppieren der mobilen Kommunikationsterminals in den ersten Untersatz und den zweiten Untersatz.

### Revendications

**1.** Un composant de réseau de communication (500) comprenant :

un déterminateur (501) configuré pour déterminer, pour chaque terminal d'une pluralité de terminaux de communication mobile (503) que le composant de réseau de communication dessert, si le composant de réseau de communication dessert le terminal de communication mobile en utilisant des entrées multiples et sorties multiples mono-utilisateur ou des entrées multiples et sorties multiples multi-utilisateur, grouper la pluralité de terminaux de communication mobile pour former un premier groupe que le composant de réseau de communication dessert en utilisant des entrées multiples et sorties multiples mono-utilisateur et un second groupe que le composant de réseau de communication dessert en utilisant des entrées multiples et sorties multiples multi-utilisateur, et mettre en œuvre un groupement de terminaux de communication mobile que le composant de réseau de communication dessert en utilisant des entrées multiples et sorties multiples multi-utilisateur pour former un premier sous-ensemble et un second sous-ensemble avec une plus haute fréquence d'occurrence que le groupement de la pluralité de terminaux de communication mobile pour former le premier groupe que le composant de réseau de communication dessert en utilisant des entrées multiples et sorties multiples mono-utilisateur et le second groupe que le composant de réseau de communication dessert en utilisant des entrées multiples et sorties multiples multi-utilisateur ; et

un circuit de signalisation (502) configuré pour requérir les terminaux de communication mobile de la pluralité de terminaux de communication mobile que le composant de réseau de communication dessert en utilisant des entrées multiples et sorties multiples mono-utilisateur de rapporter une information de canal à une plus faible précision que les terminaux de communication mobile de la pluralité de terminaux de communication mobile que le composant de réseau de communication dessert en utilisant des entrées multiples et sorties multiples multi-utilisateur, et requérir le premier sous-ensemble des terminaux de communication mobile que le composant de réseau de communication dessert en utilisant des entrées multiples et sorties multiples multi-utilisateur de rapporter une information de canal avec une première grande précision et au second sous-ensemble des terminaux de communication mobile des terminaux de communication mobile que le composant de réseau de communication dessert en utilisant des entrées multiples et sorties multiples multi-utilisateur de rapporter une information de canal avec une seconde grande précision, dans lequel la première grande précision est supérieure à la seconde grande précision.

2. Le composant de réseau de communication selon la revendication 1, dans lequel le circuit de signalisation (502) est configuré pour requérir les terminaux de communication mobile de la pluralité de terminaux de communication mobile que le composant de réseau de communication dessert en utilisant des entrées multiples et sorties multiples multi-utilisateur de rapporter une information de canal à une plus grande précision que les terminaux de communication mobile des terminaux de communication mobile que le composant de réseau de communication dessert en utilisant des entrées multiples et sorties multiples mono-utilisateur.

3. Le composant de réseau de communication selon la revendication 1 ou 2, dans lequel le rapport d'une information de canal à la plus faible précision comprend le rapport d'une information de canal sur la base d'un premier livre de codes ayant une plus basse résolution qu'un second livre de codes sur la base duquel les terminaux de communication mobile que le composant de réseau de communication dessert en utilisant des entrées multiples et sorties multiples multi-utilisateur vont rapporter une information de canal.

4. Le composant de réseau de communication selon l'une quelconque des revendications 1 à 3, dans lequel le circuit de signalisation (502) est configuré pour requérir les terminaux de communication mobile de télécharger le second livre de codes s'ils vont rapporter une information de canal sur la base du second livre de codes.

5. Le composant de réseau de communication selon l'une quelconque des revendications 1 à 4, dans lequel le composant de réseau de communication (500) est un composant d'un réseau de communication mobile cellulaire.

6. Le composant de réseau de communication selon l'une quelconque des revendications 1 à 5, dans lequel le composant de réseau de communication (500) est au moins partiellement mis en œuvre par une station de base.

7. Le composant de réseau de communication selon l'une quelconque des revendications 1 à 6, dans lequel le composant de réseau de communication (500) comprend un récepteur configuré pour recevoir une information de canal provenant des terminaux de communication mobile (503).

8. Le composant de réseau de communication selon l'une quelconque des revendications 1 à 7, dans lequel le déterminateur (501) est configuré pour décider, pour chaque terminal d'une pluralité de terminaux de communication mobile (503) que le composant de réseau de communication dessert, si le composant de réseau de communication va desservir le terminal de communication mobile en utilisant des entrées multiples et sorties multiples mono-utilisateur ou des entrées multiples et sorties multiples multi-utilisateur, sur la base d'une information de canal fournie par les terminaux de communication mobile (503).

9. Le composant de réseau de communication selon l'une quelconque des revendications 1 à 8, dans lequel la première grande précision et la seconde grande précision sont toutes deux supérieures à la plus faible précision.

10. Le composant de réseau de communication selon l'une quelconque des revendications 1 à 9, dans lequel le déterminateur (501) est configuré pour grouper les terminaux de communication mobile que le composant de réseau de communication dessert en utilisant des entrées multiples et sorties multiples multi-utilisateur pour former le premier sous-ensemble et le second sous-ensemble sur la base d'une information représentant leurs mobilités respectives.

**11.** Le composant de réseau de communication selon l'une quelconque des revendications 1 à 10, dans lequel le déterminateur (501) est configuré pour détecter si un terminal de communication mobile doit être déplacé du second sous-ensemble au premier sous-ensemble avec une plus haute fréquence d'occurrence que le groupement des terminaux de communication mobile pour former le premier sous-ensemble et le second sous-ensemble.

**12.** Un procédé permettant de requérir une information de canal, comprenant :

la détermination (601), pour chaque terminal d'une pluralité de terminaux de communication mobile qu'un composant de réseau de communication dessert, si le composant de réseau de communication dessert le terminal de communication mobile en utilisant des entrées multiples et sorties multiples mono-utilisateur ou des entrées multiples et sorties multiples multi-utilisateur, le groupement (403) de la pluralité de terminaux de communication mobile pour former un premier groupe que le composant de réseau de communication dessert en utilisant des entrées multiples et sorties multiples mono-utilisateur et un second groupe que le composant de réseau de communication dessert en utilisant des entrées multiples et sorties multiples multi-utilisateur, et la mise en œuvre d'un groupement (405) de terminaux de communication mobile que le composant de réseau de communication dessert en utilisant des entrées multiples et sorties multiples multi-utilisateur pour former un premier sous-ensemble et un second sous-ensemble avec une plus haute fréquence d'occurrence que le groupement de la pluralité de terminaux de communication mobile pour former le premier groupe que le composant de réseau de communication dessert en utilisant des entrées multiples et sorties multiples mono-utilisateur et le second groupe que le composant de réseau de communication dessert en utilisant des entrées multiples et sorties multiples multi-utilisateur ;
la requête (602) aux terminaux de communication mobile de la pluralité de terminaux de communication mobile que le composant de réseau de communication dessert en utilisant des entrées multiples et sorties multiples mono-utilisateur de rapporter une information de canal à une plus faible précision que les terminaux de communication mobile de la pluralité de terminaux de communication mobile que le composant de réseau de communication dessert en utilisant des entrées multiples et sorties multiples multi-utilisateur ; et
la requête (406) au premier sous-ensemble des terminaux de communication mobile que le composant de réseau de communication dessert en utilisant des entrées multiples et sorties multiples multi-utilisateur de rapporter une information de canal avec une première grande précision et au second sous-ensemble des terminaux de communication mobile des terminaux de communication mobile que le composant de réseau de communication dessert en utilisant des entrées multiples et sorties multiples multi-utilisateur de rapporter une information de canal avec une seconde grande précision, dans lequel la première grande précision est supérieure à la seconde grande précision.

**13.** Le procédé permettant de requérir une information de canal selon la revendication 12, comprenant en outre :
la détection si un terminal de communication mobile doit être déplacé du second sous-ensemble au premier sous-ensemble avec une plus haute fréquence d'occurrence que le groupement des terminaux de communication mobile pour former le premier ensemble et le second sous-ensemble.

**FIG 1**

**FIG 2**

**FIG 3**

EP 3 301 824 B1

# FIG 4

400

SU-/MU-MIMO
Scheduling
Algorithm

① **401**
[Prereq. condition]
BS commands MSs in the cell to report
the quantized channel information by
using a low resolution CB.
[opt] MS reports $f_{Dos}$ as well.
BS collects $A_i^l$ ($i$ is MS index).

② **402**
„User Grouping
Timer" expired? — No

Yes

③ **403**
BS performs user grouping based on
collected $A_i^l$ for MU-MIMO
→ BS generates MUS group(s)

For all the „Candidates"

Candidates / MUS group 2
TM

MUS group 1
Tracking
Mode

MUS
group $n$

<System Parameters>
User grouping timer (X [s]) >
Tracking mode entrance qual. timer (XX [ms])
> Exit qual. timer (X [ms])

**Per each MUS group**

**404**
④ „Tracking Mode
Entrance Qual. Timer"
expired? — No

Yes

⑤ **405**
[Tracking Mode Entrance
Qualification]
BS checks every MS in this MUS group
if it would be eligible for „Tracking
Mode" based on its mobility (est.
Speed or reported $f_{Dos}$)

**For MSs working in Tracking Mode**

⑥ **406**
[Tracking Mode Operation]
BS commands MSs qualified for Tracking Mode to
enter into „Tracking Mode";
MSs should report the channel information $A_t^h$
using a high resolution CB with encoded feedback.
[alt] BS commands MSs to download the high
resolution CB, if required.

**407**
⑦ „Exit Qual.
Timer" expired? — No

Yes

⑧ **408**
[Exit MUS Group Check]
BS checks every MS if it satisfies
„MUS group exit condition";
If found, BS expels these MS(s) from
this MUS group; expelled MS(s)
belong to „candidates"

⑨ **409**
[Exit Tracking Mode Check]
BS checks
every rest of MS(s) if it satisfies
„Tracking Mode exit condition";
If found, BS expels these MS(s) from
Tracking Mode Operation; expelled
MS(s) belong to this MUS group

**FIG 5**

500

500

Determiner — 501

Signaling circuit — 502

503

503

**FIG 6**

600

601

Determine, for each of a plurality of mobile communication terminals that a communication network component serves, whether the communication network component serves the mobile communication terminal using single-user multiple input multiple output or multi-user multiple input multiple output

602

Request the mobile communication terminals of the plurality of mobile communication terminals which the communication network component serves using single-user multiple input multiple output to report channel information at a lower accuracy than the mobile communication terminals of the plurality of mobile communication terminals which the communication network component serves using multi-user multiple input multiple output

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20090086842 A1
- US 20080165876 A1
- EP 1919096 A1

**Non-patent literature cited in the description**

- **ZTE.** *TSG-RAN WG1 #59bis,* 18 January 2010